# EUROPEAN PATENT APPLICATION

(11) **EP 3 945 076 A1**
(43) Date of publication of application: **02.02.2022**
(21) Application number: 20188035.8
(22) Date of filing: 28.07.2020
(51) Int. Cl.: C02F 1/66, C02F 1/00

(54) **INDUSTRIAL WASTEWATER TREATMENT**

(71) Applicant: Georg Fischer Rohrleitungssysteme AG, 8201 Schaffhausen (CH)
(72) Inventor: COSTA, André, 8045 Zuerich (CH); SCHERRER, Dominik, 78224 Singen (DE); BAEUCHLE, Yannic, 8222 Beringen (CH); ZHANG, HuiHua, Bozhou City, Anhui Province (CN)
(74) Representative: Fenner, Seraina

(57) **Abstract**

Method for obtaining a wastewater stream with a predefined pH-value from industrial wastewaters, preferably from a chemical industry, comprising the following steps:
• determining pH values of individual wastewater streams
• calculation of the required ratio of the individual wastewater streams to obtain a merged wastewater stream from the individual wastewater streams with a predefined pH value
• merging and mixing of the individual wastewater streams to a merged wastewater stream according to the calculated quantities.

## Description

Method and system for obtaining a wastewater stream with a predefined pH-value from industrial wastewaters, preferably from a chemical industry.

Today chemical industries discharge enormous amounts of wastewater with various pH-values what will be stored in buffer tanks located at the factory, laboratories analyses samples of the wastewater from the buffer tanks and after receiving of the report from laboratories the operator opens the valves from the buffer tanks and let all different wastewater with the various pH-values in a pool. That makes the treatment of such wastewater very complicated for the operator because he does not know which additive he has fill in to neutralize the wastewater as good as possible.

US2019/0382293 A1 discloses a system and a method for pH neutralizing of waste liquid. The waste liquid is pumped in a treatment tank and subsequently through a recirculation line where the pH value will be tested. While flowing through the recirculation line the pH-value of waste liquid will be tested and to get a neutral waste liquid an acid or a base neutralizer will be mixed in the waste liquid.

It is the object of the invention to propose a method and a system that reduces the costs and the chemical additives, which are used to neutralize the wastewater.

This object is achieved according to the invention in that the inventive method comprising the following steps:
- determining pH values of individual wastewater streams
- calculation of the required ratio of the individual wastewater streams to obtain a merged wastewater stream from the individual wastewater streams with a predefined pH value
- merging and mixing of the individual wastewater streams to a merged wastewater stream according to the calculated quantities and
an inventive system for the regulation of wastewater streams comprising several plants which generate different wastewater with individual pH values, a central wastewater treatment plant and a piping system which connects the plants to the central wastewater treatment plant, characterized in that the system comprises a software, wherein the software conducts the regulation of the wastewater streams.

The inventive method for obtaining a wastewater stream with a predefined pH-value, preferably between the pH-value of 7 to 10, from industrial wastewaters, preferably from a chemical industry, comprising the determining of the pH-values of individual wastewater streams. This can be done manually that means that an operator collects samples from the wastewater which is generated by a plant and send it to a laborite. The laborite has either an access to the software of the industrial wastewater plant a fill in the pH-results directly or they will inform the operator of the plant and he will fill in the measured pH-values in their software. This will be done for each separate wastewater stream. A calculation of the required ratio of the individual wastewater streams to obtain a merged wastewater stream from the individual wastewater streams with a predefined pH-value will be done on the basis on the determined pH-values. Preferably. The predefined pH-value is in the range between 7 and 10 this allows a reduction of additives and reduces the costs. The synergy of the individual wastewater streams with different pH-values will be used to get a mutual neutralization respectively to get a merged stream with a predefined pH-value preferably between 7 and 10.
The individual wastewater streams will be merged and mixed to a merged wastewater stream according to the calculated quantities. The merged wastewater stream has a pH-value in the predefined range preferably between 7 and 10. This brings the advantage the operator needs less additive to neutralize the wastewater and the wastewater has always the same range of the pH-value without the use of additional additives only with the merging of the individual wastewater streams due to its appropriate pH-values.

The inventive method uses preferably an algorithm calculate the quantities of the individual wastewater streams to obtain the predefined pH value in the merged wastewater stream. With the determined pH-values of the individual streams and the algorithm will be calculated the amount of each individual stream to mixing to get a merged wastewater stream in the predefined range.

The inventive method includes that preferably at least two individual wastewater streams are merged and mixed to form a merged wastewater stream. Of course it is possible to merge and mix even more individual wastewater streams. This is dependent from the industrial wastewater treatment plant and how many plants are connected through piping systems with the central wastewater treatment plant where the merged wastewater will mixed.

Preferably, there will be no additives added to the individual wastewater streams to get a merged wastewater stream in the predefined pH-value preferably between 7 and 10. This reduces the amount of additional additives for the neutralization of the wastewater and uses the advantage of the synergies of the individual wastewater streams if the streams will be merged and mixed.

Preferably, the determined pH-values of the individual wastewater streams will be collected in a software and the calculation and specification of the quantity ratios is conducted with the software too. This has the advantage that the laboratories directly or the operator have only to fill in the pH-results from the pH-samples which have been analyzed in the laboratory or by means of sensors directly. Wherein the system can be configured in such a way that the means of sensors are directly connected to the system respectively with the software and the determined pH-value of the individual wastewater streams will be recorded with the software.

In a preferred embodiment, the determined pH-values are determined by a laboratory and the pH values are entered in the software. It is possible, that the laboratory has a direct access to the software of the wastewater treatment plant and fill in the values directly or the laboratory transmits the values to the wastewater treatment plant where the operator fill in the pH-values and perhaps further information in the software which uses these information for the calculation of the merged wastewater stream and perhaps for additional calculations or statistics.

In a further embodiment, are the pH-values determined directly in the individual wastewater streams by means of sensors and transmitted directly to the software or to the operator who fills in the software. Through this embodiment it is possible to do analysis of the wastewater without an external laboratory what saves time and reduces external costs also.

The inventive system for the regulation of wastewater streams in an industrial wastewater treatment plant, preferably in the chemical industry, comprising several plants, which generate different wastewater with individual pH values. Some plants generate more acidic wastewater and some more alkaline wastewater if the individual wastewater will be merged and mixed in the right ratio the synergy effect can be used to get a more neutralized merged wastewater respectively which has a predefined pH-value preferably between 7 and 10. The system comprising also a central wastewater treatment plant where all individual wastewater streams flow together wherein in advance an analyses of the individual streams respectively a determining of the pH-values of the individual streams takes place and after that the streams will be merged and mixed in the right ratios to get the merged wastewater stream. The system comprising a piping system which connects the plants to the central wastewater treatment plant. The piping system enables a direct connection between the individual plants and the central wastewater treatment plant. With valves and sensors which are located in the piping system and connected to the software can the whole industrial wastewater treatment plant regulated, the method can run more or less automatically. The system comprises a software, wherein the software conducts the regulation of the wastewater streams wherein the software will be used to record all collected data and information of the wastewater streams which are used for the calculation done by the software too. Preferably, a control unit regulates the process wherein the collected data from the sensors and the valves will be recorded in the software and beside the determined pH-values it is also possible to determine and calculate additional value and data which are useable to regulate the valves or other adjustable or controllable devices for an optimal merged wastewater stream.

Preverably, the piping system comprises valves and sensors and other devices to regulate the stream of the wastewater streams. Preferably, the valves, sensors and other devices to regulate the stream have a communication interface to communicate with each other respectively for a data exchange also with the software, wherein the software is preferably in the control unit arranged. The usable communication interfaces are Bluetooth, any radio, infrared or cable interface or other standardized interfaces.

All possible embodiments can be freely combined with one another and the method features also apply to the device and vice versa.

An exemplary embodiment of the invention is described by way of the Figure, the invention not being restricted to only the exemplary embodiment, in which:

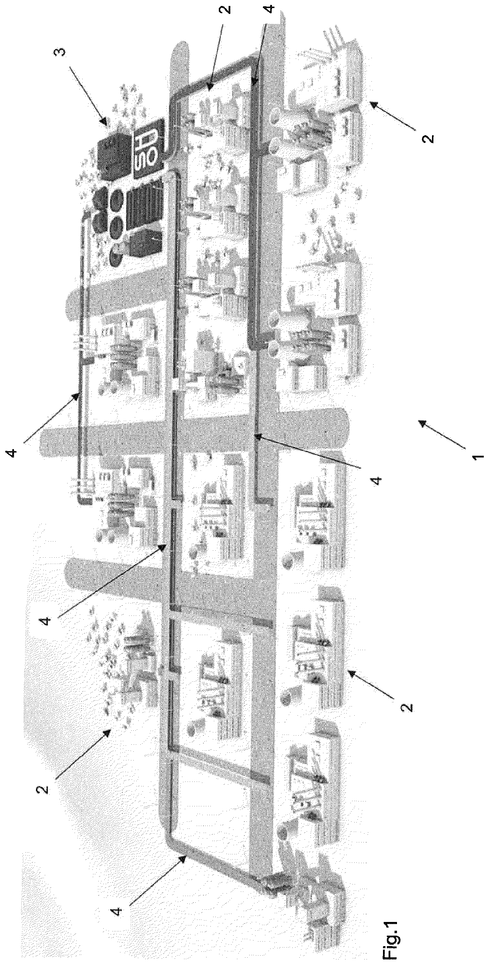

Figure 1 shows a map of a industrial wastewater treatment plant.

Figure 1 shows an industrial wastewater treatment plant 1 with several plant 2 which generate wastewater. Especially the chemical industry generates a lot of wastewater with a high level of an acidic or alkaline wastewater. To reduce the amount of additives for the neutralization of the wastewater it is possible to use the synergy effect between them and to merge and mix the individual wastewater of the individual plants 2. As shown in the Figure 1 the plants 2 are connected via piping systems 4 to a central wastewater treatment plant 3 where all individual wastewater streams will be collected and merged and mixed to get a merged wastewater with a predefined pH-value preferably between 7 and 10. The piping system 4 respectively the vales, sensors and other devices other devices to regulate the stream will be controlled by a software respectively a control unit and enables remote control and regulation of the individual wastewater streams.

### Reference numbers

- 1: industrial wastewater treatment plant
- 2: plant
- 3: central wastewater plant
- 4: piping system

## Claims

1. Method for obtaining a wastewater stream with a predefined pH-value from industrial wastewaters, preferably from a chemical industry, comprising the following steps:
• determining pH values of individual wastewater streams
• calculation of the required ratio of the individual wastewater streams to obtain a merged wastewater stream from the individual wastewater streams with a predefined pH value
• merging and mixing of the individual wastewater streams to a merged wastewater stream according to the calculated quantities.

2. Method according to claim 1, **characterized in that** an algorithm is used to calculate the quantities of the individual wastewater streams to obtain the predefined pH value in the merged wastewater stream.

3. Method according to one of claims 1 or 2, **characterized in that** at least two individual wastewater streams are merged and mixed to form a merged wastewater stream.

4. Method according to one of claims 1 to 3, **characterized in that** no additives are added to the individual wastewater streams to get a merged wastewater stream in the predefined pH-value preferably between 7 and 10.

5. Method according to one of claims 1 to 4, **characterized in that** the determined pH values are collected in a software and the calculation and specification of the quantity ratios is conducted with the software too.

6. Method according to one of the preceding claims, **characterized in that** the determined pH-values are determined by a laboratory and the pH values are entered in the software.

7. Method according to one of the preceding claims, **characterized in that** the pH values are determined directly in the individual wastewater streams by means of sensors and transmitted directly to the software.

8. System for the regulation of wastewater streams in an industrial wastewater treatment plant (1), preferably in the chemical industry, regulated according to the method according to claims 1 to 7, comprising several plants (2) which generate different wastewater with individual pH-values, a central wastewater treatment plant (3) and a piping system (4) which connects the plants (2) to the central wastewater treatment plant (3), **characterized in that** the system comprises a software, wherein the software conducts the regulation of the wastewater streams.

9. System according to claim 8, **characterized in that**, the piping system (4) comprises valves and sensors and other devices to regulate the stream of the wastewater streams.

10. System according to claim 9, **characterized in that** the valves, sensors and other devices to regulate the stream have a communication interface to communicate with each other respectively for a data exchange also with the software, wherein the software is preferably in the control unit arranged.
